# EUROPEAN PATENT SPECIFICATION

(11) **EP 4 227 626 B1**
(45) Date of publication and mention of the grant of the patent: **08.04.2026**
(21) Application number: 23020070.1
(22) Date of filing: 08.02.2023
(51) Int. Cl.: F28D 20/00

(54) **IMPROVED ENERGY STORAGE FACILITY**
VERBESSERTE ENERGIESPEICHEREINRICHTUNG
INSTALLATION DE STOCKAGE D'ÉNERGIE AMÉLIORÉE

(30) Priority: 09.02.2022 ES 202230199 U
(43) Date of publication of application: 16.08.2023
(73) Proprietor: KYOTO TECHNOLOGY SPAIN, S.L., 06800 Merida (ES)
(72) Inventor: Barros Borrero, Andrés, 06800 Mérida Badajoz (ES)
(74) Representative: De Castro Hermida, José Luis

(56) References cited:
- WO-A1-2016/150461
- WO-A1-2020/204933
- WO-A1-2021/130648
- ES-U- 1 247 480

## Description

### TECHNICAL FIELD

The present invention refers to an improved energy storage facility, through the movement and accumulation of thermal fluids, such as molten salts or thermal oil.

### STATE OF THE ART

The field of energy storage has evolved enormously with the need to store, transport, and manage the use of thermal fluids, such as molten salts. These storage systems are usually based on tanks or thermal batteries with a modular system of two or three tanks for fluid storage in cold temperature conditions and two or three tanks for hot temperatures. This design factor is conditioned by the use of carbon steel materials in the case of working temperatures below 400 °C and stainless steels in the case of higher temperatures (for example, 500 °C).

This definition of design as a storage tank at low or high temperature places a restriction on the specific use of each tank. For example, tanks defined as for low temperature do not allow the storage of fluids at temperatures above 400 °C. This definition of the working temperature conditions of each one of the tanks or thermal batteries reduces the initial investment required by the system, but reduces the total thermal storage capacity, availability, and manageability of the facility for a similar modularity.

WO2016150461 discloses a thermal energy storage plant where a first working fluid is circulated, including a heat accumulator for storing the thermal energy comprising a plurality of heat storage units, where some of them may work with cold or hot fluid.

WO2020204933 teaches how a method of optimizing thermocline zone within a thermal storage system including a plurality of storage tanks, where some of them can work with fluid at two different temperatures.

Finally, WO2021130648 discloses an energy storage facility according to the preamble of claim 1 and shows a plant for storing and discharging thermal energy comprising a storage device for a pressurized gas that works as a fluid configured to store thermal energy, a storage device.

The utility model ES1247480U is relevant, which describes a method for pumping thermal fluids by piston effect and pressurized working gases.

The applicant is not aware of any device or facility that can be considered similar to the invention, or that proposes a solution to the same technical problems.

### BRIEF EXPLANATION OF THE INVENTION

The invention consists of an improved energy storage facility according to the claims.

The invention discloses a facility for collecting, storing, and transferring energy for industrial, heating, thermal or electrical energy generation applications, etc. The collection and transfer are carried out using a thermal fluid such as molten salts, thermal oils, water, etc.

In such a system, the amount of energy stored depends on the number of tanks that can be filled with hot fluid at any time. In the state of the art, such a number corresponds to half of the tanks. In the invention, advantageously, almost all tanks can be used, leaving a single empty tank. Therefore, for a desired energy capacity, the number of tanks, valves and other elements is considerably reduced. As a result, the thermal storage capacity is greater for the same number of tanks or, equivalently, the volume of the facility is less for the same storage capacity. Secondarily, the facility is highly versatile, being very easy to increase or reduce the thermal storage capacity by adding tanks. The addition of a tank directly translates into a tank increase in terms of thermal capacity.

The present energy storage facility is made up of three or more thermal (cold or hot) fluid storage tanks, a generator or heat source, and heat recovery equipment for its use. At least one of the tanks is a dual tank. A "dual tank" will be considered one that is configured to store hot fluid and cold fluid at different times of operation. Therefore, it is made of a material resistant to the highest temperatures and will have the capacity to receive thermal fluid at both temperatures. Preferably, one of the tanks will work all the time with cold fluid in order to reduce its requirements, such as the material, the space occupied due to the insulation, the cost, the conditions of the pipes that lead thereto, etc.

If, in addition, the movement of the fluids is carried out by means of a piston effect, using a pressurized working gas, it results in a system of low complexity, with reduced maintenance and almost zero possibility of leaks. An example can be seen in ES1247480U, from the same applicant. This working gas, or another (non-thermal) working fluid, is introduced into the tanks at high pressure to carry out the driving of the thermal fluid. Therefore, when the corresponding tank finish the emptying, it remains full of working gas at high pressure and temperature. It is desirable to recover this thermal and mechanical energy to increase the efficiency of the facility. For that purpose, it can be stored in an auxiliary reservoir or derived directly for use. Several non-limiting examples of the use of this thermal-mechanical energy are: a turbocharger to raise the pressure of the working gas that empties another tank, as input to the compressor that allows emptying other tanks, generating electricity in a turbine, generating steam for an industrial process... It can also preheat the working gas before it enters the other tank in an exchanger.

For example, in a facility with N tanks, at least N-2 are dual in order to maximize the facility's capacity. In that case, one tank will always be cold, and another will always be hot. However, the most preferred solution uses N-1 dual tanks and a cold one.

The facility can be incorporated in one or more ISO or other standard containers, so that it is highly modular since all the tanks are the same (dual) except perhaps one or two of them. Therefore, coupling more containers to the system directly increases, 1:1, the thermal storage capacity of the facility.

Other particular embodiments will be discussed below with the support of the figures.

### DESCRIPTION OF THE DRAWINGS

For a better understanding of the invention, the following figures are included.

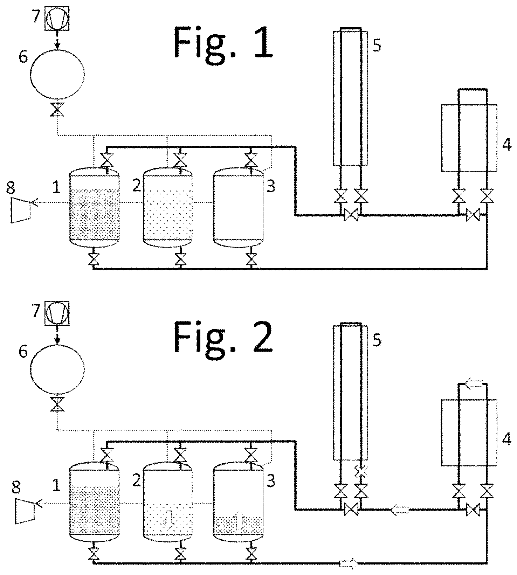

Figures 1 to 4 represent a diagram of the operation of a first embodiment, in several phases of the process.

### EMBODIMENTS OF THE INVENTION

Next, an embodiment of the invention will be briefly described as an illustrative and non-limiting example thereof.

In Figure 1 it is shown an example of an embodiment made up of three or more tanks (1,2,3) that store thermal fluid at two temperatures: hot and cold. At least one of the tanks (1,2,3), for example the third tank (3), is a dual tank and is configured to store hot fluid and cold fluid at different times of operation. The tanks (1,2,3) comprise the insulation and the necessary elements to work at the temperature of the thermal fluid. With a correct configuration, it is possible to ensure that one of the tanks (1,2,3) always stores cold fluid, thus allowing simpler materials and equipment to be used for that tank (1,2,3).

The facility also comprises a generator or heat source (4) and heat recovery equipment (5). The heat source (4) can be a solar facility, a heat recovery system in a thermal power plant, an electric heater with surplus electricity or from a renewable facility, or any other source of temperature. The recovery equipment (5) uses the hot fluid to generate steam in a thermal energy recovery unit, generate electricity, or for any other possible use of the hot fluid. The type of heat source (4) or the recovery equipment (5) is not relevant to the invention. Likewise, there can be more than one heat source (4) and more than one recovery equipment (5), the same or different, in series or in parallel. In the figures it is depicted a single pipe that moves hot or cold fluid depending on the moment of operation, as it is the most technically simple solution. However, it is possible to have a pipe for cold fluid and another one for hot fluid with their respective inputs to the dual tanks.

At the moment depicted in Figure 1, the first tank (1) stores hot fluid, the second tank (2) stores cold fluid, and the third tank (3) is empty. It must be considered that "empty" refers to the minimum level of the tank (1,2,3) and that it may contain thermal fluid.

The facility also includes pressure gauges, thermal probes, branches, bypass, valves, and any other type of device common in this type of facility. The pumping or driving of the hot and cold fluids can be by working gas, pressurized, as the method shown in ES1247480U or by high temperature pumps.

In the figures it is shown the embodiment with driving through pressurized gas. It can be seen that each tank (1,2,3) has an upper inlet for the working gas from a reservoir (6) or high-pressure buffer. The working gas can be, for example, gaseous nitrogen or clean, dry air. It is preferably chemically neutral so as not to affect the facility or the thermal fluid. Preferably it will be slightly soluble in the thermal fluid. The reservoir (6) is fed by a compressor (7) or another system that ensures that the pressure in the reservoir (6) is the desired one. This reservoir (6) will be stored at very high pressure to store energy that can be used in the event of a power cut or any other emergency situation. It is also possible to use the off-peak hours to fill the reservoir (6) or buffer, as well as another source of renewable electrical energy, with the purpose of having pressure energy stored in the gas so that the loading and unloading operations of the thermal fluid of the system need not be simultaneous in time. The thermal fluid leaves the bottom of the tank (1,2,3). The return entry will be from above. The gas or working fluid will enter from above to perform the piston effect.

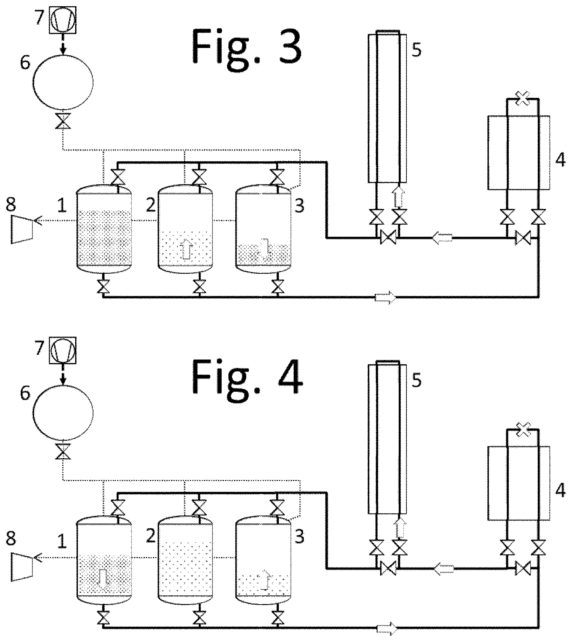

In Figure 2 it is shown a second moment of operation of the facility, in which the third tank (3), dual, is being filled with hot fluid from the second tank (2) through the heat source (4). In Figure 3, the third tank (3) is full of hot fluid and it begins to empty into the second tank (2), through the recovery equipment (5), returning to the situation in Figure 1. Once the third tank is empty, the first tank (1) is emptied through the recovery equipment (5) towards the third tank (3) (Figure 4).

Therefore, it can be seen that in Figures 2 and 4 the third tank (3) has stored fluid at different temperatures. In between, it is possible to carry out a phase of preheating or recovery of noticeable heat by means of a fluid, such as the working gas. This working gas is pressurized after emptying the tank (1,2,3) so it has mechanical energy in the form of pressure and high temperature. This thermal and/or mechanical energy can be recovered in several ways, for example, in a turbine (8).

This configuration makes it possible to use all the tanks (1,2,3), except one, to store hot fluid and thus have a much higher capacity than previous solutions without dual tanks. In a facility with N tanks, thermal energy can be stored in N-1 tanks. For that purpose, it is enough that there are N-2 dual tanks, if there is a hot tank. It is also possible to use N-1 dual tanks or even that all are dual. For that purpose, one or two tanks (1,2,3) will always work with the same temperature. In the case described in this section of the specification, the first tank (1) always works hot and the second tank (2) always works cold and the third tank (3) has worked dually to maximize capacity.

If desired, the facility can be incorporated into one or more ISO containers or any other type of standardized container, so that it is possible to connect a variable number of containers to create a facility with one capacity or another. Each additional container would have one or more dual tanks, since to increase the capacity, it is only necessary to provide more dual tanks along with their pipes, valves, etc. For example, the tank (1,2,3) can be made up of the container itself.

## Claims

1. Energy storage facility, made up of three or more thermal fluid storage tanks (1,2,3), a heat source (4) and recovery equipment (5), where at least one of the tanks (1,2,3) is a dual tank configured to store hot fluid and cold fluid at different times of operation **characterized in that** the thermal fluid is driven by the piston effect of a pressurized working gas, where each tank (1,2,3) has an upper inlet for the working gas from a reservoir (6) or high-pressure buffer, which is fed by a compressor (7).

2. Energy storage facility, according to claim 1, **characterized in that** it comprises N tanks, of which at least N-2 are dual.

3. Energy storage facility, according to claim 2, **characterized in that** it comprises at least N-1 dual tanks.

4. Energy storage facility, according to claim 1, **characterized in that** it is configured so that one of the tanks (1,2,3) works all the time with cold fluid.

5. Energy storage facility, according to claim 1, **characterized in that** it comprises a noticeable heat recovery system in the dual tank in the passage of hot thermal fluid to cold thermal fluid by means of working gas.

6. Energy storage facility, according to claim 1, **characterized in that it** is incorporated into one or more standardized containers.

7. Energy storage facility, according to claim 1, **characterized in that** it comprises a system for recovering the mechanical and/or thermal energy of the pressurized working gas once the thermal fluid transfer processes between tanks have been carried out.

## Patentansprüche

1. Energiespeicheranlage, bestehend aus drei oder mehr Wärmeträgerflüssigkeitsspeichertanks (1,2,3), einer Wärmequelle (4) und einer Rückgewinnungseinrichtung (5), wobei mindestens einer der Tanks (1,2,3) ein Doppeltank ist, der so konfiguriert ist, dass er zu unterschiedlichen Betriebszeiten heiße und kalte Flüssigkeit speichert **dadurch gekennzeichnet, dass** die Wärmeträgerflüssigkeit durch die Kolbenwirkung eines unter Druck stehenden Arbeitsgases angetrieben wird, wobei jeder Tank (1,2,3) einen oberen Einlass für das Arbeitsgas aus einem Reservoir (6) oder Hochdruckpuffer besitzt, der von einem Kompressor (7) gespeist wird.

2. Energiespeicheranlage nach Anspruch 1, **dadurch gekennzeichnet, dass** sie N Tanks umfasst, von denen mindestens N-2 Doppeltanks sind.

3. Energiespeicheranlage nach Anspruch 2, **dadurch gekennzeichnet, dass** sie mindestens N-1 Doppeltanks umfasst.

4. Energiespeicheranlage nach Anspruch 1, **dadurch gekennzeichnet, dass** sie so konfiguriert ist, dass einer der Tanks (1,2,3) ständig mit kalter Flüssigkeit betrieben wird.

5. Energiespeicheranlage nach Anspruch 1, **dadurch gekennzeichnet, dass** sie ein spürbares Wärmerückgewinnungssystem im Doppeltank beim Durchgang von heißem Wärmeträgerfluid zu kaltem Wärmeträgerfluid mittels Arbeitsgas umfasst.

6. Energiespeicheranlage nach Anspruch 1, **dadurch gekennzeichnet, dass** sie in einen oder mehrere standardisierte Behälter integriert ist.

7. Energiespeicheranlage nach Anspruch 1, **dadurch gekennzeichnet, dass** sie ein System zur Rückgewinnung der mechanischen und/oder thermischen Energie des unter Druck stehenden Arbeitsgases umfasst, sobald die Wärmeträgerflüssigkeitstransferprozesse zwischen den Tanks durchgeführt wurden.

## Revendications

1. Installation de stockage d'énergie, composée de trois ou plusieurs réservoirs de stockage de fluide thermique (1,2,3), d'une source de chaleur (4) et d'un équipement de récupération (5), où au moins un des réservoirs (1,2,3) est un réservoir double configuré pour stocker du fluide chaud et du fluide froid à différents moments de fonctionnement, **caractérisée en ce que** le fluide thermique est entraîné par l'effet piston d'un gaz de travail sous pression, où chaque réservoir (1,2,3) possède une entrée supérieure pour le gaz de travail provenant d'un réservoir (6) ou d'un tampon haute pression, alimenté par un compresseur (7).

2. Installation de stockage d'énergie, selon la revendication 1, **caractérisée en ce qu'**elle comprend N réservoirs, dont au moins N-2 sont doubles.

3. Installation de stockage d'énergie, selon la revendication 2, **caractérisée en ce qu'**elle comprend au moins N-1 réservoirs doubles.

4. Installation de stockage d'énergie, selon la revendication 1, **caractérisée en ce qu'**elle est configurée de sorte que l'un des réservoirs (1,2,3) fonctionne en permanence avec un fluide froid.

5. Installation de stockage d'énergie, selon la revendication 1, **caractérisée en ce qu'**elle comprend un système de récupération de chaleur sensible dans le double réservoir lors du passage du fluide thermique chaud au fluide thermique froid au moyen d'un gaz de travail.

6. Installation de stockage d'énergie, selon la revendication 1, **caractérisée en ce qu'**elle est incorporée dans un ou plusieurs conteneurs standardisés.

7. Installation de stockage d'énergie, selon la revendication 1, **caractérisée en ce qu'**elle comprend un système de récupération de l'énergie mécanique et/ou thermique du gaz de travail sous pression une fois que les processus de transfert de fluide thermique entre les réservoirs ont été effectués.
